# EUROPÄISCHE PATENTSCHRIFT

(11) **EP 2 859 929 B1**
(45) Veröffentlichungstag und Bekanntmachung des Hinweises auf die Patenterteilung: **08.07.2020**
(21) Anmeldenummer: 14172771.9
(22) Anmeldetag: 17.06.2014
(51) Int. Cl.: B01D 33/048, C02F 11/123, B01D 33/333, B01D 33/46, B01D 33/76, C02F 11/12, E03F 5/14

(54) **Förderband-Filtereinrichtung**
Filtering device for a conveyor belt
Dispositif de filtre à bande de transport

(30) Priorität: 25.06.2013 DE 102013212081
(43) Veröffentlichungstag der Anmeldung: 15.04.2015
(73) Patentinhaber: Frankenberger, Guido, 35578 Wetzlar (DE)
(72) Erfinder: Frankenberger, Guido, 35578 Wetzlar (DE)
(74) Vertreter: advotec.

(56) Entgegenhaltungen:
- EP-A1- 0 676 227
- EP-A2- 0 291 574
- WO-A1-2004/002604
- DE-U1- 20 215 591
- US-A1- 2012 175 294

## Beschreibung

Die vorliegende Erfindung betrifft eine Förderband-Filtereinrichtung zur mechanischen Reinigung einer in einem Kanal strömenden, mit Feststoffen verunreinigten Flüssigkeit mit einem endlosen Filterband aus miteinander verbundenen, gegeneinander verschwenkbaren flächigen Filterelementen und einem flexiblen Antriebsmittel, das über an eine untere Umlenkeinrichtung und zumindest eine obere Umlenkeinrichtung geführt ist, sowie einem Rahmengestell, dass die Umlenkeinrichtungen und das Filterband trägt, wobei im Bereich der oberen Umlenkeinrichtung eine rotierend antreibbare Abstreifeinrichtung angeordnet ist, die an einer am Rahmengestell gelagerten Schwinge angeordnet ist, wobei die Abstreifeinrichtung mittels einer Stützeinrichtung entgegen der Gewichtskraft der Abstreifeinrichtung abgestützt wird.

Förderband-Filtereinrichtungen der eingangs genannten Art werden auch als so genannte "Paternoster-Filterrechen" bezeichnet und dienen vor allem zur mechanischen Reinigung strömender Abwässer in hierzu ausgebildeten Kanälen. Die Filterelemente werden von dem Abwasser quer oder auch in Längsrichtung der Filterelemente durchströmt und tragen das Filtergut, welches die Filterelemente nicht passieren kann, aus dem Kanal aus. Im Bereich einer oberen, oberhalb des Abwasserspiegels angeordneten Umlenkeinrichtung des Filterbands ist eine beispielsweise als rotierende Bürste ausgeführte Abstreifeinrichtung vorgesehen, die in einem Abstreifvorgang an den Filterelementen anhaftendes Filtergut von den Filterelementen entfernt, bevor diese infolge des Umlaufs des Filterbands wieder in die durch den Kanal strömende Flüssigkeit eintauchen. Da die Effektivität des Abstreifvorgangs nicht zuletzt davon abhängig ist, mit welcher Kontaktkraft die Abstreifeinrichtung gegen die Filterelemente anliegt und es auch zur Vermeidung eines übermäßigen Verschleißes der Abstreifeinrichtung wesentlich ist, die Kontaktkraft möglichst gering einzustellen, ist es für den gewünschten reibungslosen Betrieb einer Förderband-Filtereinrichtung wesentlich, eine möglichst optimale Einstellung der Kontaktkraft zu ermöglichen und für entsprechende Einstellungsmöglichkeiten an der Abstreifeinrichtung bzw. der Förderband-Filtereinrichtung zu sorgen.

Neben den Einstellungen bzw. Änderungen der Einstellung der Kontaktkraft, die infolge eines im Betrieb der Abstreifeinrichtung nicht zu vermeidenden Verschleißes notwendig werden, werden Einstellungen an der Abstreifeinrichtung auch dann notwendig, wenn aufgrund eines Verschleißes des flexiblen Antriebsmittels der Förderband-Filtereinrichtung und einer entsprechenden Längung des Antriebsmittels eine Änderung des Achsabstands zwischen den Umlenkeinrichtungen des Förderbands erforderlich wird.

Aus der WO 2004/002604 A1 ist eine Förderband-Filtereinrichtung zur mechanischen Reinigung einer in einem Kanal strömenden, mit Feststoffen verunreinigten Flüssigkeit bekannt, die im Bereich einer oberen Umlenkeinrichtung eine rotierend antreibbare Abstreifeinrichtung aufweist, die an einer am Rahmengestell gelagerten Schwinge angeordnet ist, derart, dass die Abstreifeinrichtung mittels einer Stützeinrichtung entgegen der Gewichtskraft der Abstreifeinrichtung abgestützt wird. Die DE 202 15 591 U1, die EP 0 676 227 A1 und die EP 0 291 574 A2 zeigen Förderband-Filtereinrichtungen, bei denen die Abstreifeinrichtung zusammen mit einer unteren und einer oberen Umlenkeinrichtung für das endlose Filterband an einem Rahmengestell angeordnet sind.

Die US 2012/0175294 A1 zeigt eine Förderband-Filtereinrichtung mit einer unteren und einer oberen Umlenkeinrichtung für ein endloses Filterband, wobei sich im Bereich der unteren Umlenkeinrichtung eine am Rahmengestell angeordnete Abstreifeinrichtung befindet.

Der vorliegenden Erfindung liegt die Aufgabe zugrunde, die zum optimalen Betrieb einer Abstreifeinrichtung notwendigen Einstellungsmaßnahmen auf ein Minimum zu begrenzen und somit einen entsprechenden Wartungsaufwand ohne Beeinträchtigung der Betriebssicherheit zu reduzieren.

Diese Aufgabe wird durch eine Förderband-Filtereinrichtung mit den Merkmalen des Anspruchs 1 gelöst.

Bei der erfindungsgemäßen Förderband-Filtereinrichtung wird die Abstreifeinrichtung mittels einer Stützeinrichtung entgegen der Gewichtskraft der Abstreifeinrichtung abgestützt, wobei die Stützeinrichtung zusammen mit der oberen Umlenkeinrichtung auf einem gemeinsamen, gegenüber dem Rahmengestell verstellbaren Träger angeordnet ist.

Erfindungsgemäß wird somit für die obere Umlenkeinrichtung sowie die Stützeinrichtung eine gemeinsame Basis geschaffen, mit der Folge, dass eine Relativverstellung der Position der oberen Umlenkeinrichtung, wie sie beispielsweise zur Kompensation einer Längung des Antriebsmittels erforderlich wird, stets eine gleichzeitige und gleichgroße Verstellung der Stützeinrichtung gegenüber dem Rahmengestell bewirkt. Aufgrund der erfindungsgemäßen Ausgestaltung ist es somit nicht mehr notwendig, nachfolgend einer Änderung der Relativposition der oberen Umlenkeinrichtung eine entsprechende Änderung der Relativposition der Stützeinrichtung gegenüber dem Rahmengestell auszuführen, um sicherzustellen, dass eine von der Abstreifeinrichtung auf die Filterbandelelemente ausgeübte Kontaktkraft im Wesentlichen konstant bleibt.

Besonders vorteilhaft ist es, wenn die Stützeinrichtung zusammen mit einem Wellenlager einer Umlenkwelle der oberen Umlenkeinrichtung auf dem Träger angeordnet ist, da somit der Träger gleichzeitig zur Ausbildung eines Wellenlagers oder zur Ausbildung einer Lageraufnahme für das Wellenlager der oberen Umlenkeinrichtung dienen kann.

Bei einer vorteilhaften Ausführungsform ist die Schwinge oberhalb der Umlenkwelle gelagert, so dass ein zuverlässiger, durch Schwerkraft bedingter Kontakt zwischen der Stützeinrichtung und der Abstreifeinrichtung gewährleistet ist.

Wenngleich es möglich ist, zur Ausbildung einer Stützkraft der Stützeinrichtung die Stützeinrichtung mit Gewichten zu versehen, ist es besonders vorteilhaft ist, wenn die Stützeinrichtung zur Ausbildung einer Stützkraft eine Federeinrichtung aufweist, so dass bei Aufweitungen eines zwischen der Abstreifeinrichtung und den Filterelementen ausgebildeten Kontaktspaltes infolge des Passierens größerer Filtergutstücke dynamische Rückstellkräfte gebildet werden, die für eine schnelle Kontaktspaltreduzierung sorgen.

Wenn gemäß einer bevorzugten Ausführungsform der Förderband-Filtereinrichtung die Federeinrichtung eine gegenüber dem Träger veränderbare Federabstützung aufweist, können Anpassungen in der Einstellung der von der Abstreifeinrichtung auf das Filterband ausgeübten Kontaktkraft auf einfache Art und Weise durch Änderung der Vorspannung der Federeinrichtung vorgenommen werden.

Besonders vorteilhaft hinsichtlich einer einfach aufgebauten Federeinrichtung ist es, wenn diese als Zugfedereinrichtung ausgebildet ist, da somit auf eine seitliche Führung der Federeinrichtung, also beispielsweise eine Führungshülse, die ein Ausknicken der Federeinrichtung verhindert, verzichtet werden kann.

Hinsichtlich einer möglichst kompakten Bauweise ist es vorteilhaft, wenn die Stützeinrichtung als ein am Träger in einem Schwenklager gelagerter Stützhebel ausgebildet ist, derart, dass eine durch die Federeinrichtung definierte Stützachse seitlich versetzt zu einem auf die Abstreifeinrichtung wirkenden Stützende des Stützhebels ist, so dass die Federeinrichtung beispielsweise auf derselben Seite des Rahmengestells wie der Förderbandantrieb angeordnet werden kann, ohne hierdurch die Breite der Förderband-Filtereinrichtung zu vergrößern.

Wenn die Schwinge, mittels der die Abstreifeinrichtung verschwenkbar am Rahmengestell angeordnet ist mit einer Filterbandlängsachse einen Winkel größer als 60° einschließt, wird ein erwünschtes Wegschwenken der Abstreifeinrichtung vom Filterband im Falle größerer vom Filterband aus der Flüssigkeit herausgeförderter Gegenstände unterstützt, um Schäden an der Abstreifeinrichtung bzw. dem Filterband infolge eines Verklemmens der Gegenstände zwischen der Abstreifeinrichtung und dem Filterband zu verhindern.

Nachfolgend wird eine bevorzugte Ausführungsform der Erfindung anhand der Zeichnung näher erläutert. Es zeigen:
- **Fig. 1**: eine Seitenansicht einer Förderband-Filtereinrichtung im Betrieb;
- **Fig. 2**: eine vergrößerte Teildarstellung eines oberen Gestellteils der in **Fig. 1** dargestellten Förderband-Filtereinrichtung im Längsschnitt und von der Gegenseite berachtet;
- **Fig. 3**: eine Seitenansicht des in **Fig. 2** dargestellten oberen Gestellteils der Filterband-Fördereinrichtung;
- **Fig. 4**: eine zu der in **Fig. 3** dargestellten Seitenansicht gegenüberliegende Seitenansicht der Förderband-Filtereinrichtung.

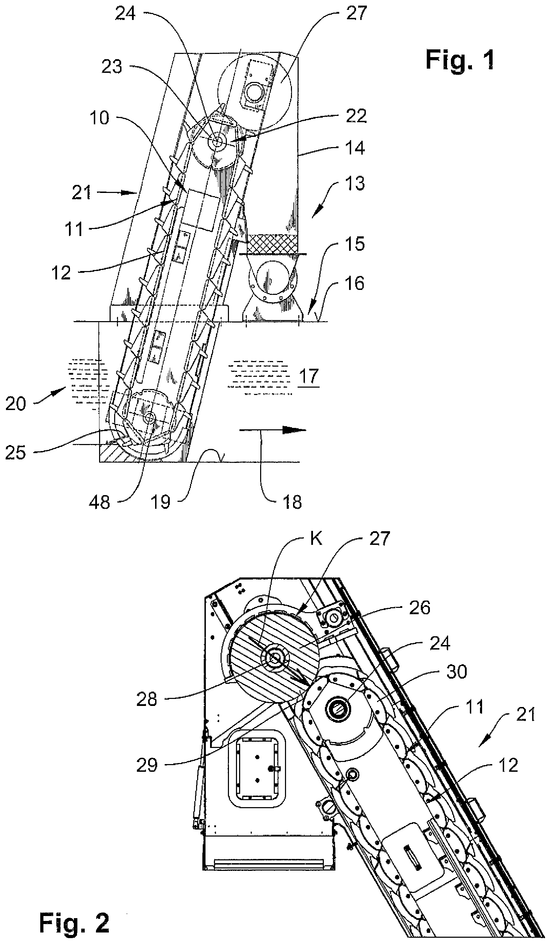

Die in **Fig. 1** dargestellte Förderband-Filtereinrichtung weist ein Rahmengestell 10, ein an dem Rahmengestell 10 geführtes Filterband 11, einen mit dem Rahmengestell 10 und dem Filterband 11 verbundenen Kettentrieb 12 und eine Filtergutabförderung 13 mit einem Abwurfkanal 14 auf. Die Förderband-Filtereinrichtung dient zur Reinigung eines Kanals 15, der sich unterhalb eines Installations-Niveaus 16 der Förderband-Filtereinrichtung erstreckt.

Der Kanal 15 wird von einer mit Feststoffen beladenen Flüssigkeit 17 durchströmt in einer durch einen Richtungspfeil veranschaulichten Strömungsrichtung 18, wobei sich der Kanal 15 senkrecht zur Papierebene in einer erheblichen Breite erstrecken kann. Die Förderband-Filtereinrichtung reicht bis zu einer Kanalsohle 19, so dass der gesamte Strömungsquerschnitt des Kanals 15 quer zur Strömungsrichtung 18 so abgesperrt ist, dass die Flüssigkeit 17 den im Kanal 15 befindlichen Teil der Förderband-Filtereinrichtung passieren muss.

Das Rahmengestell 10 besteht im vorliegenden Fall aus einem unteren Gestellteil 20, der den von der Flüssigkeit 17 zu passierenden Teil bildet, und einen oberen Gestellteil 21, der sich außerhalb des Kanals 15 befindet und an seinem oberen Ende in einer oberen Umlenkeinrichtung 22 ein Wellenlager 23 aufweist, das zur Lagerung einer oberen Umlenkwelle 24 dient, welche zusammen mit einer unteren Umlenkwelle 25 einer unteren Umlenkeinrichtung 48, die am unteren Ende des innerhalb der Flüssigkeit 17 angeordneten unteren Gestellteils 20 angeordnet ist, einen Umlauf des Filterbands 11 ermöglicht. Abweichend von der in **Fig. 1** dargestellten Ausführungsform kann die Förderband-Filtereinrichtung auch mehrere oberhalb bzw. außerhalb des Kanals 15 angeordnete obere Umlenkeinrichtungen aufweisen, um eine definierte Umleitung des Filterbands im Bereich einer Abstreifeinrichtung 27 zu ermöglichen.

Wie insbesondere die **Fig. 2** zeigt, befindet sich bei dem dargestellten Ausführungsbeispiel die Abstreifeinrichtung 27, die im vorliegenden Fall eine rotierende Bürste 26 aufweist, oberhalb der oberen Umlenkwelle 24. Die Bürste 26 ist auf einer Abstreiferwelle 28 angeordnet und liegt mit einer Kontaktkraft K gegen eine Filteroberfläche 29 von Filterelementen 30 an, die über den Kettentrieb 12 verschwenkbar miteinander verbunden sind und derart das Filterband 11 ausbilden.

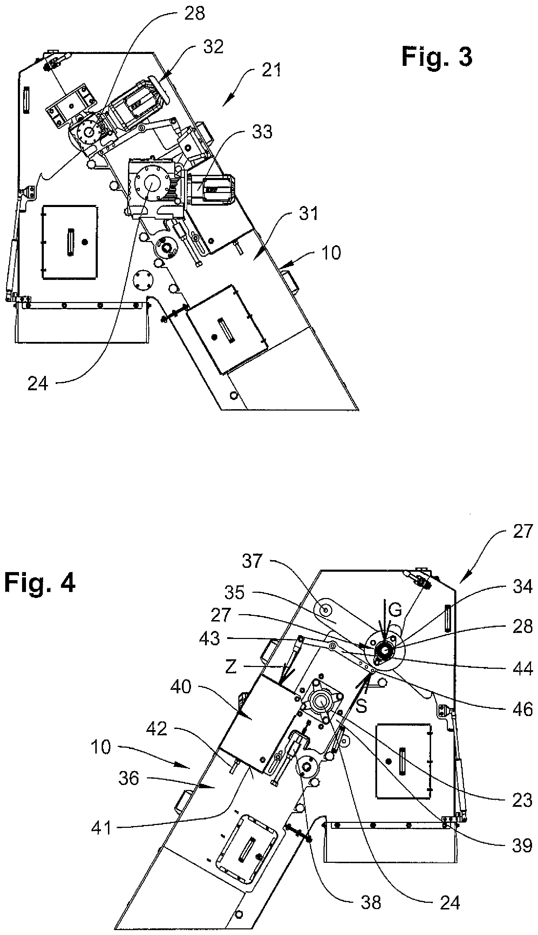

In den **Figuren 3** und **4** ist der obere Gestellteil 21 in jeweils einer Seitenansicht dargestellt, wobei **Fig. 3** eine Antriebsseite 31 mit einem auf der Abstreiferwelle 28 angeordneten Abstreiferantrieb 32 und einem auf der oberen Umlenkwelle 24 angeordneten Filterband-Antrieb 33 zeigt, und **Fig. 4** eine Abtriebsseite 36 zeigt mit der in einem Abstreiferwellenlager 34 gelagerten Abstreiferwelle 28 und der in einem Wellenlager 23 gelagerten Umlenkwelle 24 zeigt.

Wie ferner aus den **Figuren 3** und **4** ersichtlich, ist die Abstreiferwelle 28 der Abstreifeinrichtung 27 in den Abstreiferwellenlagern 34 am freien Ende einer Schwinge 35 gelagert, die auf der Antriebsseite 31 und der Abtriebsseite 36 jeweils in einem Schwingenlager 37 oberhalb des durch die obere Umlenkwelle 24 definierten Umlenkpunkts gelagert ist. Sowohl auf der Antriebsseite 31 als auch auf der Abtriebsseite 36 befindet sich am Rahmengestell 10 verschiebbar und mittels Stelleinrichtungen 38 einstellbar angeordnet jeweils ein hier als Trägerplatte ausgebildeter Träger 39, an dem die Wellenlager 23 der oberen Umlenkwelle 24 angeordnet sind, und der zugleich als Befestigungseinrichtung für eine Federeinrichtung 40 dient, die in dem dargestellten Ausführungsbeispiel als Zugfeder ausgebildet ist und mit einem Federende an eine an dem Träger 39 ausgebildete Krafteinleitung 41 angeschlossen ist. Die Krafteinleitung 41 weist im vorliegenden Fall eine Stelleinrichtung 42 auf, die es ermöglicht, die Vorspannung der Federeinrichtung 40 und damit die auf ein Federanschlussende 43 eines Stützhebels 44 wirkende Zugkraft Z zu beeinflussen.

Der Stützhebel 44 ist in einem Hebelgelenk 45 ebenfalls auf dem Träger 39 gelagert. Demzufolge bewirkt eine Erhöhung der Zugkraft Z am Federanschlussende 43 ein Verschwenken des Stützhebels 44 entgegen dem Uhrzeigersinn und damit eine auf die Schwinge 35 bzw. das an einem Stützende 46 der Schwinge 35 angeordnete Abstreiferwellenlager 34 wirkende Stützkraft S, die einer Gewichtskraft der Abstreifeinrichtung 27 entgegenwirkt.

Aus der vorstehend beschriebenen Anordnung der Wellenlager 23 der oberen Umlenkwelle 24 und der Krafteinleitung 41 der Federeinrichtung 40 sowie des Hebelgelenks 45 des Stützhebels 44 auf dem gemeinsamen Träger 39 ergibt sich, dass bei einer Veränderung des Abstands zwischen der unteren Umlenkeinrichtung 48 und der oberen Umlenkeinrichtung 22, also im Fall des dargestellten Ausführungsbeispiels bei einer Veränderung des Abstands zwischen den Umlenkwellen 24 und 25, des Kettenantriebs 12 durch Betätigung der Stelleinrichtung 38 eine gleichgroße Verstellung des Stützendes 46 des Stützhebels 43 bewirkt wird, so dass infolge eines entsprechenden Verschwenkens der Schwingen 35 die Kontaktkraft K zwischen der Abstreifeinrichtung 27 bzw. der Bürste 26 und der Filteroberfläche 29 der Filterelemente 30 konstant bleibt.

Zur Einstellung einer gewünschten Kontaktkraft K kann die Vorspannung der Federeinrichtung 40 über eine einfache Verstellung der auf die Krafteinleitung 41 wirkenden Stelleinrichtung 42 eingestellt werden.

Bei dem in den **Figuren 3** und **4** dargestellten Ausführungsbeispiel ist die Federeinrichtung 40 in einem Gitterkäfig 47 angeordnet, um eine Beeinträchtigung der Federwirkung durch Kollision mit Gegenständen zu verhindern.

## Patentansprüche

1. Förderband-Filtereinrichtung zur mechanischen Reinigung einer in einem Kanal (15) strömenden, mit Feststoffen verunreinigten Flüssigkeit (17) mit einem endlosen Filterband (11) aus miteinander verbundenen, gegeneinander verschwenkbaren flächigen Filterelementen (30) und einem flexiblen Antriebsmittel, das über eine untere Umlenkeinrichtung (48) und zumindest eine obere Umlenkeinrichtung (22) geführt ist, sowie einem Rahmengestell (10), dass die Umlenkeinrichtungen und das Filterband trägt, wobei im Bereich der oberen Umlenkeinrichtung eine rotierend antreibbare Abstreifeinrichtung (27) angeordnet ist, die an einer am Rahmengestell gelagerten Schwinge (35) angeordnet ist, wobei die Abstreifeinrichtung mittels einer Stützeinrichtung entgegen der Gewichtskraft der Abstreifeinrichtung abgestützt wird,
**dadurch gekennzeichnet,**
**dass** die Stützeinrichtung zusammen mit der oberen Umlenkeinrichtung auf einem gemeinsamen, gegenüber dem Rahmengestell verstellbaren Träger (39) angeordnet ist.

2. Förderband-Filtereinrichtung nach Anspruch 1,
**dadurch gekennzeichnet,**
**dass** die Stützeinrichtung zusammen mit einem Wellenlager (23) einer Umlenkwelle (24) der oberen Umlenkeinrichtung (22) auf dem Träger (39) angeordnet ist.

3. Förderband-Filtereinrichtung nach Anspruch 2,
**dadurch gekennzeichnet,**
**dass** die Schwinge (35) oberhalb der Umlenkwelle (24) gelagert ist.

4. Förderband-Filtereinrichtung nach einem der vorangehenden Ansprüche,
**dadurch gekennzeichnet,**
**dass** die Stützeinrichtung zur Ausbildung einer Stützkraft eine Federeinrichtung (40) aufweist.

5. Förderband-Filtereinrichtung nach Anspruch 4,
**dadurch gekennzeichnet,**
**dass** die Federeinrichtung (40) eine gegenüber dem Träger (39) veränderbare Federabstützung aufweist.

6. Förderband-Filtereinrichtung nach Anspruch 4 oder 5,
**dadurch gekennzeichnet,**
**dass** die Federeinrichtung (40) als Zugfeder ausgebildet ist.

7. Förderband-Filtereinrichtung nach einem der vorangehenden Ansprüche,
**dadurch gekennzeichnet,**
**dass** die Stützeinrichtung einen am Träger in einem Schwenklager gelagertern Stützhebel (44) aufweist, derart, dass eine durch die Federeinrichtung (40) definierte Stützachse seitlich versetzt zu einem auf die Abstreifeinrichtung (27) wirkenden Stützende (46) des Stützhebels ist.

8. Förderband-Filtereinrichtung nach einem oder mehreren der vorangehenden Ansprüche,
**dadurch gekennzeichnet,**
**dass** die Schwinge (35) mit einer Filterbandlängsachse einen Winkel größer als 60° einschließt.

## Claims

1. A conveyor belt filter device for mechanically cleaning a liquid (17) which flows through a channel (15) and is polluted with solids, comprising an endless filter belt (11) of interconnected flat filter elements (30) which can be pivoted against one another, and a flexible driving means which is guided over a lower deflection device (48), and at least one upper deflection device (22), and a framework (10) which carries the deflection devices and the filter belt, wherein in the area of the upper deflection device a wiper device (27) is arranged which can be driven to rotate and is arranged on a swinging link (35) which is mounted on the framework, the wiper device being supported against the weight of the wiper device by a support device,
**characterised in that**
the support device is arranged together with the upper deflection device on a common carrier (39) which is adjustable with respect to the framework.

2. The conveyor belt filter device according to claim 1,
**characterised in that**
the support device is arranged on the carrier (39) together with a shaft bearing (23) of a deflection shaft (24) of the upper deflection device (22).

3. The conveyor belt filter device according to claim 2,
**characterised in that**
the swinging link (35) is mounted above the deflection shaft (24).

4. The conveyor belt filter device according to any of the preceding claims,
**characterised in that**
the support device has a spring device (40) for generating a support force.

5. The conveyor belt filter device according to claim 4,
**characterised in that**
the spring device (40) has a spring support which is adjustable with respect to the carrier (39).

6. The conveyor belt filter device according to claim 4 or 5,
**characterised in that**
the spring device (40) is formed as a tension spring.

7. The conveyor belt filter device according to any of the preceding claims,
**characterised in that**
the support device has a support lever (44) which is mounted on the carrier in a pivot bearing in such a manner that a support axis defined by the spring device (40) is laterally offset with respect to a support end (46) of the support lever, said support end acting on the wiper device (27).

8. The conveyor belt filter device according to any of the preceding claims,
**characterised in that**
the swinging link (35) forms an angle of larger than 60° with a longitudinal axis of the filter belt.

## Revendications

1. Installation de filtration à bande transporteuse pour le nettoyage mécanique d'un liquide (17) coulant dans un canal (15) et contaminé par des matières solides, ayant un filtre à bande (11) sans fin consistant en éléments filtrants (30) qui sont reliés, qui peuvent être pivotés l'un contre l'autre et qui sont plats, et un moyen d'entraînement flexible qui est guidé sur un dispositif de déviation inférieur (48) et au moins un dispositif de déviation supérieur (22), ainsi qu'un châssis (10) qui soutient les dispositifs de déviation et le filtre à bande, un dispositif déflecteur (27) étant disposé dans la région du dispositif de déviation supérieur et pouvant être entraîné en rotation et étant disposé sur une bielle oscillante (35) qui est montée au châssis, ledit dispositif déflecteur étant appuyé contre le poids du dispositif déflecteur moyennant un dispositif d'appui,
**caractérisée en ce que**
le dispositif d'appui est disposé sur un support (39) commun conjointement avec le dispositif de déviation supérieur, le support étant ajustable par rapport au châssis.

2. Installation de filtration à bande transporteuse selon la revendication 1,
**caractérisée en ce que**
le dispositif d'appui est disposé sur le support (39) conjointement avec un palier d'arbre (23) d'un arbre de déviation (24) du dispositif de déviation supérieur (22).

3. Installation de filtration à bande transporteuse selon la revendication 2,
**caractérisée en ce que**
la bielle oscillante (35) est montée au-dessus de l'arbre d déviation (24).

4. Installation de filtration à bande transporteuse selon l'une quelconque des revendications précédentes,
**caractérisée en ce que**
le dispositif d'appui présente un ressort (40) pour générer une force d'appui.

5. Installation de filtration à bande transporteuse selon la revendication 4,
**caractérisée en ce que**
le ressort (40) présente un appui de ressort modifiable par rapport au support (39).

6. Installation de filtration à bande transporteuse selon la revendication 4 ou 5,
**caractérisée en ce que**
le ressort (40) est réalisé comme ressort de tension.

7. Installation de filtration à bande transporteuse selon l'une quelconque des revendications précédentes,
**caractérisée en ce que**
le dispositif d'appui présente un levier d'appui (44) monté au support dans un palier pivotant de telle manière qu'un axe d'appui défini par le ressort (40) est décalé latéralement par rapport à une extrémité d'appui (46) du levier d'appui qui agit sur le dispositif déflecteur (27).

8. Installation de filtration à bande transporteuse selon l'une quelconque des revendications précédentes,
**caractérisée en ce que**
la bielle oscillante (35) forme un angle supérieur à 60° avec un axe longitudinal du filtre à bande.
